# EUROPEAN PATENT APPLICATION

(11) **EP 2 196 365 A1**
(43) Date of publication of application: **16.06.2010**
(21) Application number: 08833901.5
(22) Date of filing: 26.09.2008
(51) Int. Cl.: B60R 25/10, B60J 1/17

(54) **DEVICE FOR DETECTING BREAKAGE OF OPEN/CLOSE TYPE WINDOW GLASS**

(30) Priority: 28.09.2007 JP 2007256094
(71) Applicant: Kabushiki Kaisha Toyota Jidoshokki, Kariya-shi, Aichi 448-8671 (JP)
(72) Inventor: SUZUKI, Tsuneo, Kariya-shi Aichi 448-8671 (JP)
(74) Representative: TBK-Patent
(86) International application number: PCT/JP2008/067484
(87) International publication number: WO 2009/041614

(57) **Abstract**

A breakage detection device for detecting breakage of a window glass capable of opening and closing an opening of a vehicle is provided. The breakage detection device includes a clip, a magnetic sensor, a detection unit, and a determination unit. The clip is arranged at an end portion of the window glass and holds an end portion of the window glass with a force enabling the end portion of the window glass to be crushed when the window glass breaks. The magnetic sensor detects displacement of at least part of the clip when the window glass breaks. The detection unit acquires an output value of the magnetic sensor in predetermined time intervals to detect a temporal change in the output value of the magnetic sensor. The determination unit determines that the window glass is broken when the temporal change detected by the detection unit is outside a tolerable range.

## Description

### TECHNICAL FIELD

The present invention relates to a breakage detection device for an openable window glass.

### BACKGROUND ART

A device for detecting breakage of a window glass for a vehicle to prevent theft has been developed. For example, patent document 1 discloses a device that detects breakage of the window glass by detecting the position (presence) of the window glass under a condition such as the window glass being at a fully-closed position.

It is required that such a breakage detection device ensures breakage detection without functioning erroneously. To satisfy this requirement, erroneous detection resulting from temperature characteristics of the device and erroneous detection resulting from a natural phenomenon that shakes the window glass must be prevented.
[Patent Document 1] Japanese Laid-Open Patent Publication No. 11-321564

### DISCLOSURE OF THE INVENTION

It is an object of the present invention to provide a breakage detection device for an openable window glass that ensures breakage detection without functioning erroneously.

To achieve the above object, one aspect of the present invention provides a breakage detection device for detecting breakage of a window glass capable of opening and closing an opening of a vehicle. The breakage detection device includes a clip, a magnetic sensor, a detection unit, and a determination unit. The clip is arranged at an end portion of the window glass to hold the end portion of the window glass with a force enabling the end portion of the window glass to be crushed when the window glass breaks. The magnetic sensor detects displacement of at least part of the clip when the window glass breaks. The detection unit retrieves an output value of the magnetic sensor in predetermined time intervals to detect a temporal change in the output value of the magnetic sensor. The determination unit determines breakage of the window glass when the temporal change detected by the detection unit is outside a tolerable range.

### BRIEF DESCRIPTION OF THE DRAWINGS

Fig. 1 is an exploded perspective view showing the right front door of a vehicle to which a breakage detection device according to one embodiment of the present invention is applied;
Fig. 2 is a schematic front view showing the right front door of Fig. 1;
Fig. 3 is a longitudinal cross-sectional view taken along line 3-3 in Fig. 2;
Fig. 4 is a perspective view showing the breakage detection device applied to the right front door of Fig. 1;
Fig. 5 is a front view showing the breakage detection device of Fig. 4;
Fig. 6 is a longitudinal cross-sectional view taken along line 6-6 in Fig. 5;
Fig. 7 is a front view showing the breakage detection device of Fig. 4;
Fig. 8 is a longitudinal cross-sectional view taken along line 8-8 in Fig. 7;
Fig. 9 is a front view showing the breakage detection device of Fig. 4;
Fig. 10 is a longitudinal cross-sectional view taken along line 10-10 in Fig. 9;
Fig. 11 is a flowchart showing processes executed by a microcomputer of Fig. 3;
Fig. 12 is a flowchart showing processes executed by the microcomputer of Fig. 3;
Fig. 13 is a timing chart showing a sensor output value obtained in the processes of Figs. 11 and 12, and a variation value of the sensor output;
Fig. 14 is an output characteristic diagram of the sensors of Fig. 3;
Fig. 15 is an output characteristic diagram of the sensors of Fig. 3; and
Fig. 16 is an explanatory diagram showing the conditions for obtaining the sensor output characteristics of Figs. 14 and 15.

### BEST MODE FOR CARRYING OUT THE INVENTION

An embodiment of the present invention will now be discussed with reference to the drawings.

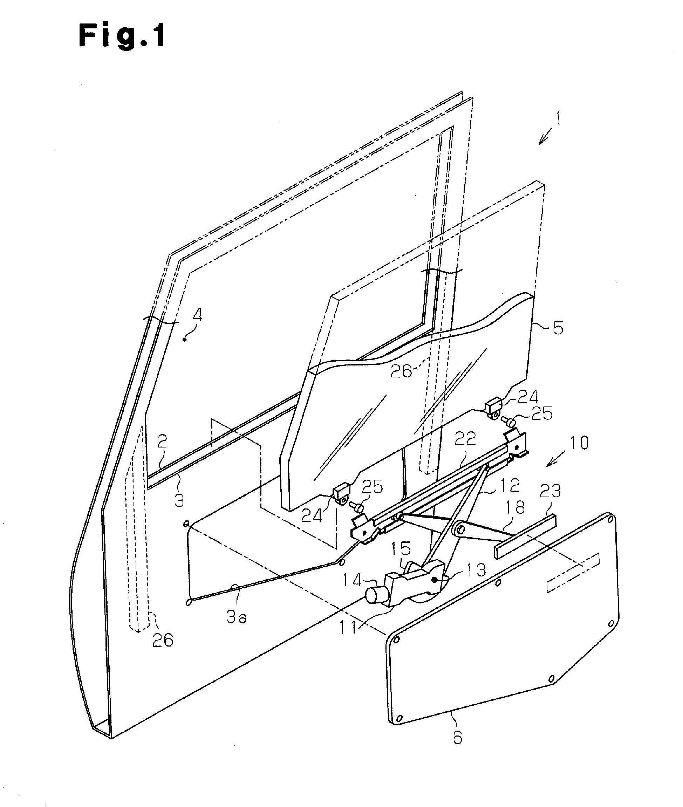

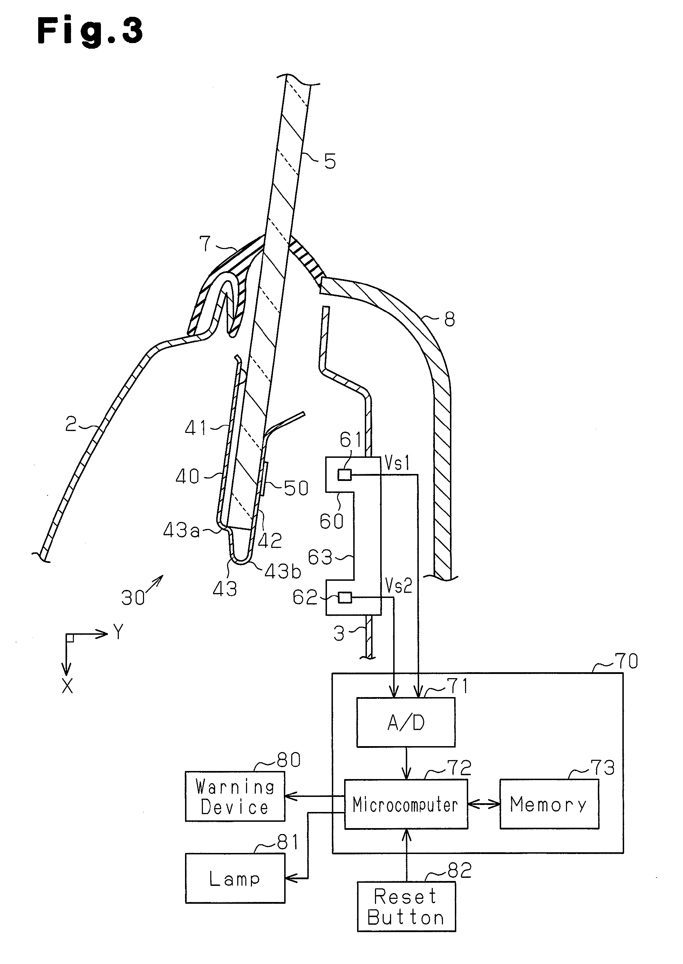

As shown in Fig. 1, a vehicle door 1 includes an outer panel 2 and an inner panel 3. A window glass 5, which is reinforced glass, is arranged between the outer panel 2 and the inner panel 3. The window glass 5 has a thickness of about 3.1 mm to 5.0 mm. A door rim 8 is arranged on the vehicle interior side of the inner panel 3 (see Fig. 3).

A window regulator 10 that vertically moves the window glass 5 is accommodated in the vehicle door 1. In the present embodiment, an X-arm window regulator is used as the window regulator 10. A door component retaining cavity 3a is formed in the inner panel 3, and a modular panel 6 closes the door component retaining cavity 3a.

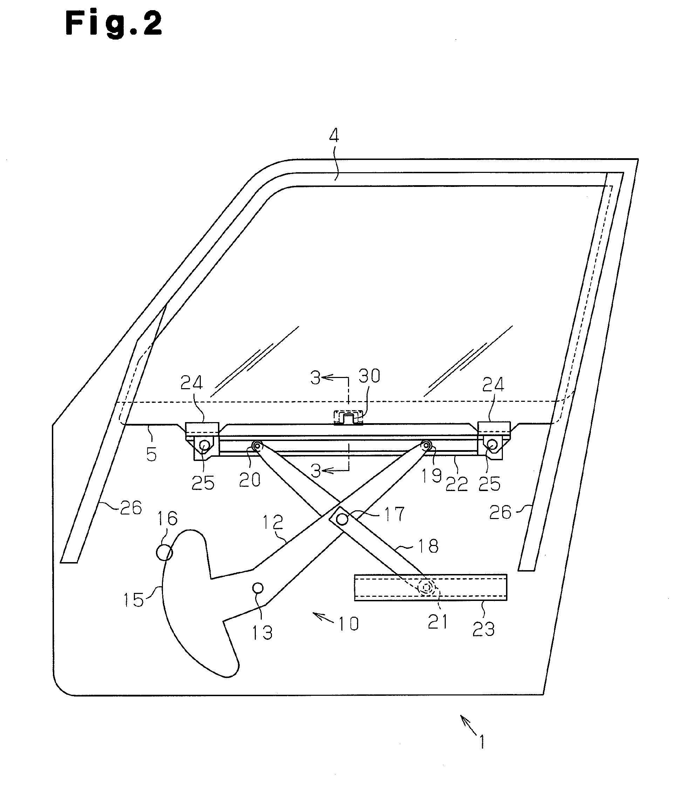

The X-arm window regulator 10 is supported by a base plate (fixed base) 11 on a vehicle exterior side surface of the modular panel 6. More specifically, the X-arm window regulator 10 includes a lift arm 12 having a pin 13, which is supported by the base plate 11. The base plate 11 is fixed to the vehicle exterior side surface of the modular panel 6. An electric drive unit 14 serving as a drive unit is fixed to the base plate 11. As shown in Fig. 2, the lift arm 12 includes a sector gear (driven gear) 15, which is formed integrally with the lift arm 12. The sector gear 15 rotates about the pin 13. The electric drive unit 14 of Fig. 1 includes a pinion 16 (see Fig. 2), which mates with the sector gear 15, and a motor (not shown), which drives the pinion 16.

The lift arm 12 includes an intermediate portion in the longitudinal direction as viewed in Fig. 2. An equalizer arm 18 includes an intermediate portion, which is pivotally coupled to the intermediate portion of the lift arm 12 by a pin 17. Guide pieces (rollers) 19 and 20 are rotatably coupled to an upper end (distal end) of the lift arm 12 and an upper end (distal end) of the equalizer arm 18, respectively. A guide piece (roller) 21 is rotatably coupled to a lower end of the equalizer arm 18.

The guide piece 19 of the lift arm 12 and the guide piece 20 of the equalizer arm 18 are movably fitted to a window glass bracket 22. The guide piece 21 of the equalizer arm 18 is movably guided by an equalizer arm bracket (orientation maintaining rail) 23, which is fixed to the vehicle exterior side surface of the modular panel 6 of Fig. 1.

Two window glass holders 24 are fixed to the lower edge of the window glass 5. The window glass holder 24 is fixed to the lower edge of the window glass 5 in advance. The window glass 5 together with the window glass holders 24 is inserted into a gap formed between the outer panel 2 and the inner panel 3 and then fixed to the window glass bracket 22 by bolts 25.

As shown in Fig. 2, the vehicle door 1 includes a pair of front and rear glass runs 26. The glass runs 26 are formed from a rubber material. The window glass 5 is movably supported by the two glass runs 26, which serve as rail members. In other words, the front and rear ends of the window glass 5 may be moved up and down guided by the glass runs 26.

When the electric drive unit 14 of Fig. 1 drives the pinion 16, the sector gear 15 pivots the lift arm 12 about the pin 13. As a result, the window glass bracket 22 (window glass 5) is lifted or lowered while remaining generally horizontal due to the equalizer arm 18, the guide pieces 19, 20, and 21, and the equalizer arm bracket 23. In this manner, the window glass 5 is lifted and lowered so that an opening 4 of the vehicle may be freely opened and closed by the window glass 5.

As shown in Fig. 3, a breakage detection device 30 for preventing unauthorized entry is arranged in the vehicle door 1. The breakage detection device 30 includes a clip 40 and a sensor unit 60.

As shown in Fig. 3, the window glass 5 is arranged between the outer panel 2 and the inner panel 3 in a state sealed by a weather strip 7. The door rim 8 is arranged on the vehicle interior side of the inner panel 3. The clip 40 is arranged at the lower end of the window glass 5 and held on the window glass 5.

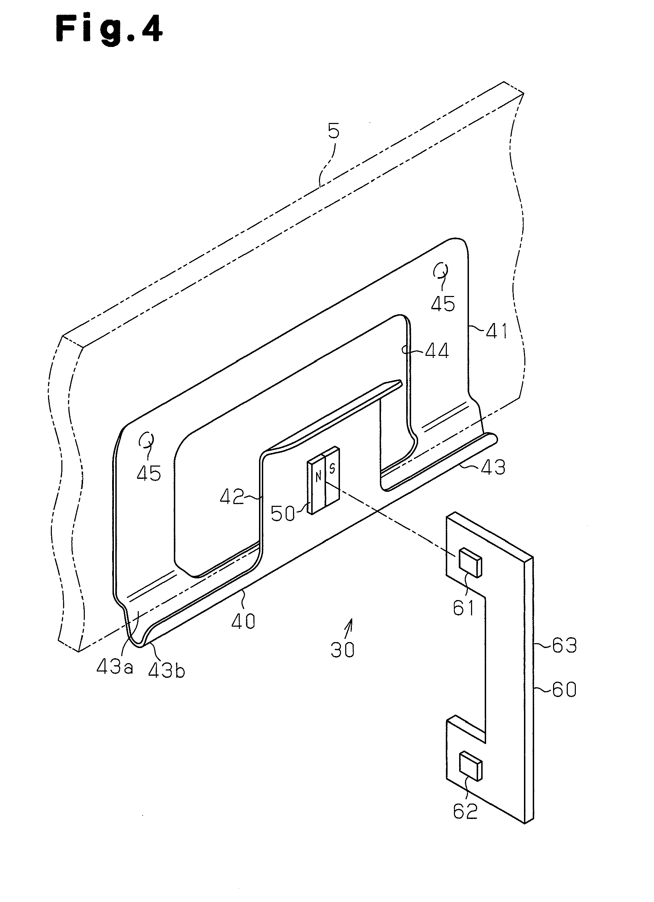

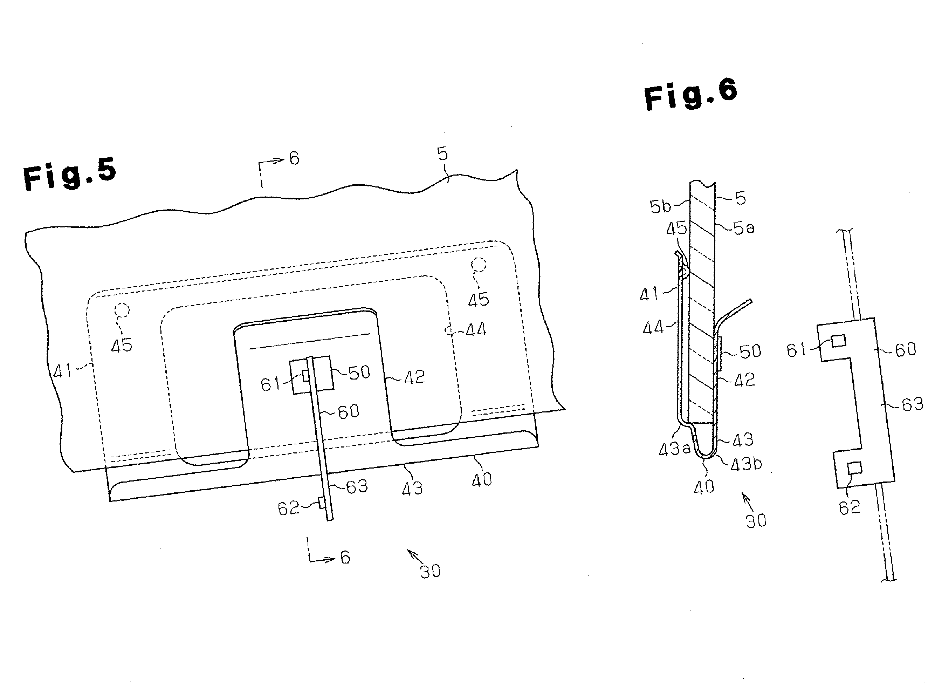

As shown in Figs. 4, 5, and 6, the clip 40 is formed by bending a sheet of steel plate spring. The clip 40 includes first and second members 41 and 42, which face each other, and a bent portion (connecting portion) 43. The first member 41, which is located at the vehicle exterior side, has a rectangular shape. The second member 42, which is located at the vehicle interior side, has a square shape and is narrower than the first member 41. The window glass 5 is arranged between the first member 41 and the second member 42. The first member 41 and the second member 42 are urged towards the window glass 5, that is, toward each other. The bent portion 43 connects the first member 41 and the second member 42. The bent portion 43 includes a first bent section 43a, which has a crank-shaped cross-section, and a second bent section 43b, which has a U-shaped cross-section. The second bent section 43b has opposing inner side surfaces spaced by a distance that is less than the thickness of the window glass 5. Accordingly, the end face of the window glass 5 is in contact with the first bent section 43a. As shown in Figs. 4 and 5, a rectangular opening 44 extends through the central part of the first member 41. The second member 42 is located at a position corresponding to the opening 44. A projection 45 projects towards the vehicle interior side from each of the left and right upper corners of the first member 41. As shown in Fig. 6, each projection 45 has a distal end, which is in contact with a first surface (reverse surface 5b) of the window glass 5. As shown in Fig. 6, the second member 42 is in contact with a second surface (front surface 5a) of the window glass 5. The second member 42 is adhered to the window glass 5.

In this manner, the first member 41 and the second member 42 are in contact with the window glass 5 at different positions in the plane of the window glass 5. Further, the first member 41 and the second member 42 are urged towards each other. Thus, force is applied to the window glass 5 at different areas in the front surface 5a and reverse surface 5b of the window glass 5. The clip 40 is held on (clamped to) the bottom portion of the window glass 5 with a force that is greater than or equal to a predetermined level.

As shown in Fig. 4 and other drawings, a permanent magnet 50 is arranged on a vehicle interior side surface of the second member 42 of the clip 40.

As shown in Fig. 3, the sensor unit 60 is fixed to the inner panel 3. Here, the vertical direction is represented by the X-direction, and the horizontal direction is represented by the Y-direction. The clip 40 is movable in the X-direction, that is, allowed to fall down.

The sensor unit 60 includes a first magnetic sensor (magnetic sensor element) 61, a second magnetic sensor (magnetic sensor element) 62, and a substrate 63. The first magnetic sensor 61 and the second magnetic sensor 62 are spaced apart in the vertical direction of the substrate 63. Specifically, the magnetic sensors 61 and 62 are spaced apart by about 4 cm. The first magnetic sensor 61 is arranged at the same height as the magnet 50. Further, the first magnetic sensor 61 is spaced apart from the magnet 50 by a predetermined distance in the Y-direction. The second magnetic sensor 62 is located below the first magnetic sensor 61. Therefore, the magnet 50 passes in front of the second magnetic sensor 62 when the clip 40 falls.

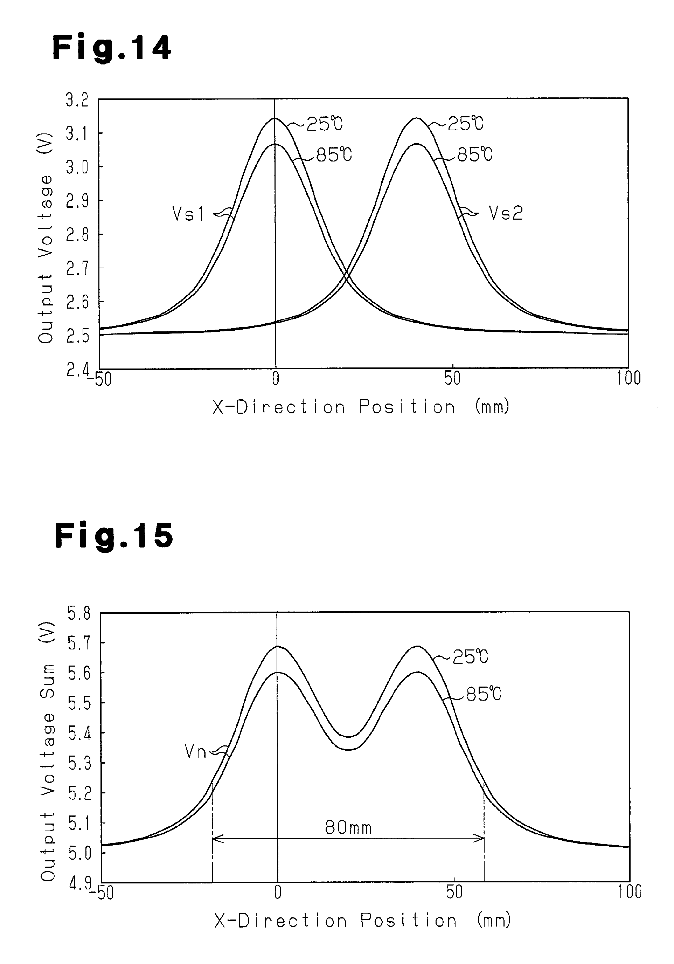

The magnetic sensors 61 and 62 output signals (output voltages Vs1 and Vs2) corresponding to the distance from the magnet 50, as shown in Fig. 14. In the state of Fig. 3, the first magnetic sensor 61 is arranged at the same height as the magnet 50 and thus has a high output voltage. Further, the second magnetic sensor 62 is arranged below the first magnetic sensor 61 and thus has a low output voltage. Hall ICs may be used as the magnetic sensors 61 and 62.

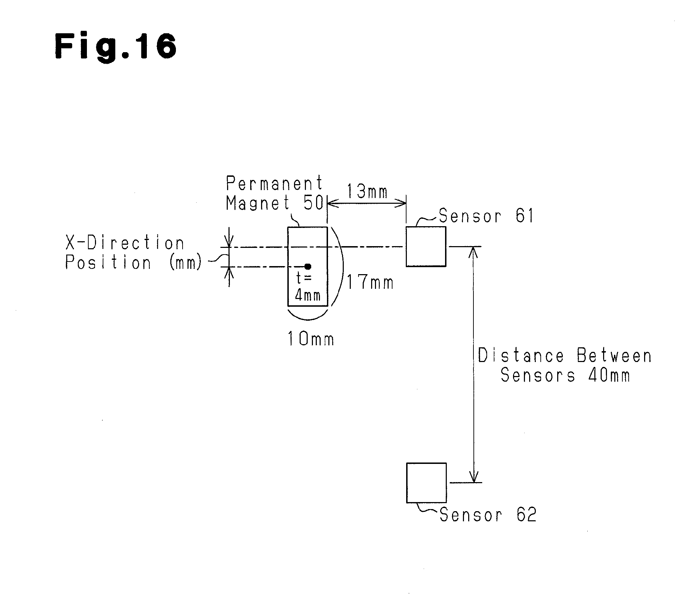

The output voltage in Fig. 14 is obtained under the conditions shown in Fig. 16. In Fig. 16, the distance between the two magnetic sensors in the X-direction is 40 mm, and the distance between the magnet and each magnetic sensor in the Y-direction is 13 mm. In Fig. 14, the horizontal axis indicates the X-direction position of each magnetic sensor when the center position of the magnet is represented by zero, and the vertical axis indicates the output voltage of each magnetic sensor.

As shown in Fig. 3, the magnetic sensors 61 and 62 are connected to a controller 70. The controller 70 includes an A/D converter 71, a microcomputer 72, and a memory 73. The A/D converter 71 converts the output voltages Vs1 and Vs2 of the magnetic sensors 61 and 62 from analog data to digital data. The output voltages (digital values) of the magnetic sensors 61 and 62 are added in the microcomputer 72 to obtain a sum Vn (= Vs1 + Vs2) of the output voltages shown in Fig. 15. This obtains a signal having a high output level in a wider range (80 mm in Fig. 15) compared to when solely using the output voltage Vs1 or Vs2 of each of the magnetic sensors 61 and 62 shown in Fig. 14. As a result, the location of the magnet 50 may be detected over a wide range. Hereinafter, the sum Vn of the output voltages of the magnetic sensors 61 and 62 will be simply referred to as a sensor output value Vn.

As shown in Fig. 3, a warning device 80, a lamp 81, and a reset button 82 are connected to the microcomputer 72. The reset button 82 inputs an operation signal to the microcomputer 72.

The operation of the breakage detection device when the window glass 5 is broken will now be discussed.

In a normal state, as shown in Figs. 5 and 6, the clip 40 is held on the end portion of the window glass 5. Specifically, the window glass 5 is held between the first member 41 and the second member 42 by the elastic force of the clip 40. The magnet 50 is located toward the vehicle exterior side from the magnetic sensor 61 of the sensor unit 60.

The following operations are performed when a vehicle occupant closes the door and moves away from the vehicle.

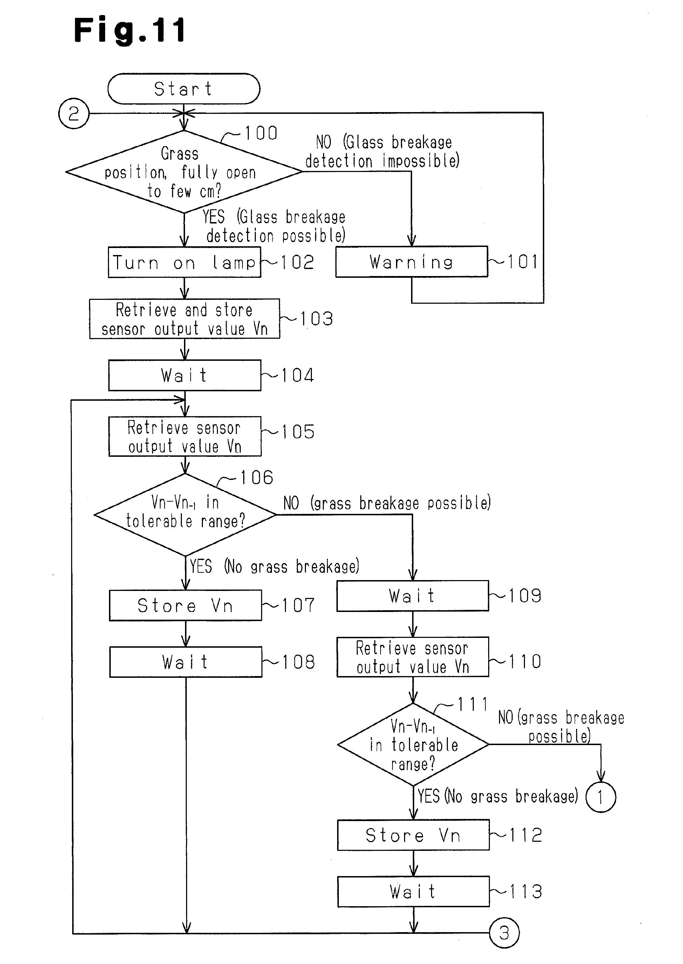

When the parking brake is operated, the operation signal of the parking brake is input to the microcomputer 72. Thus, the microcomputer 72 detects parking of the vehicle and starts the processes of Fig. 11.

In step 100 of Fig. 11, the microcomputer 72 performs an A/D conversion on the output voltages of the magnetic sensors 61 and 62 and determines from the sum of the converted digital values whether the window glass 5 is at the fully-closed position or open a few centimeters. When the glass is open a few centimeters or more, the microcomputer 72 determines that glass breakage cannot be detected and proceeds to step 101. In step 101, the microcomputer 72 activates the warning device 80 and issues a warning notifying that the window glass is widely open. The warning prompts the driver to close the window glass 5.

When the glass is at the fully-closed position or open a few centimeters, the microcomputer 72 determines that glass breakage may be detected and sets a glass breakage detection mode in step 100. The breakage detection operation of the window glass 5 is executed when this mode is set.

The strength of the window glass 5 decreases when the window glass 5 is broken. That is, when the window glass 5, which is reinforced glass, partially breaks, cracks form throughout the entire window glass 5 and drastically decrease the strength.

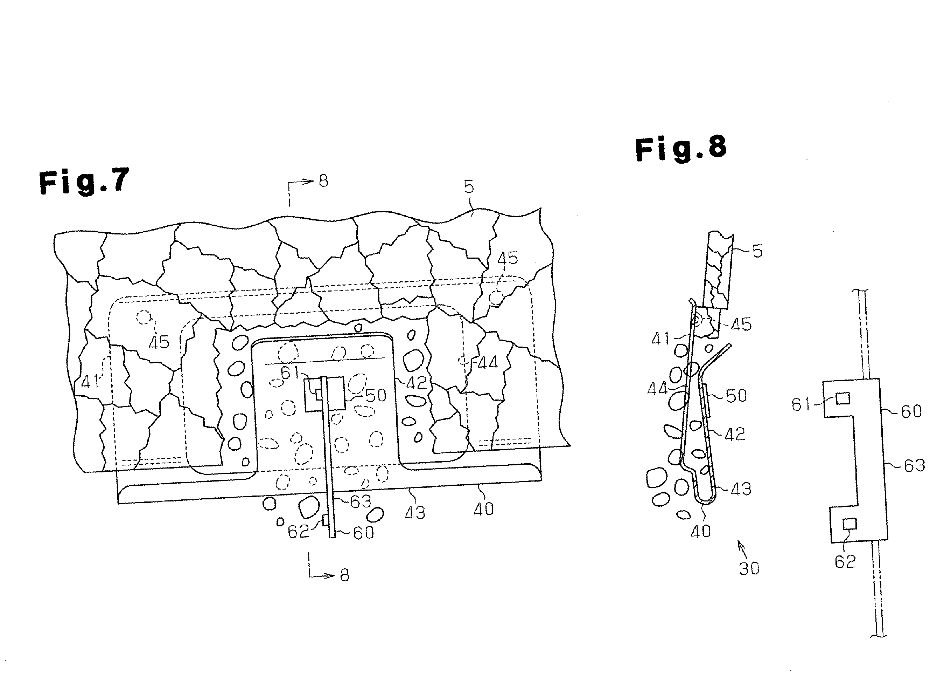

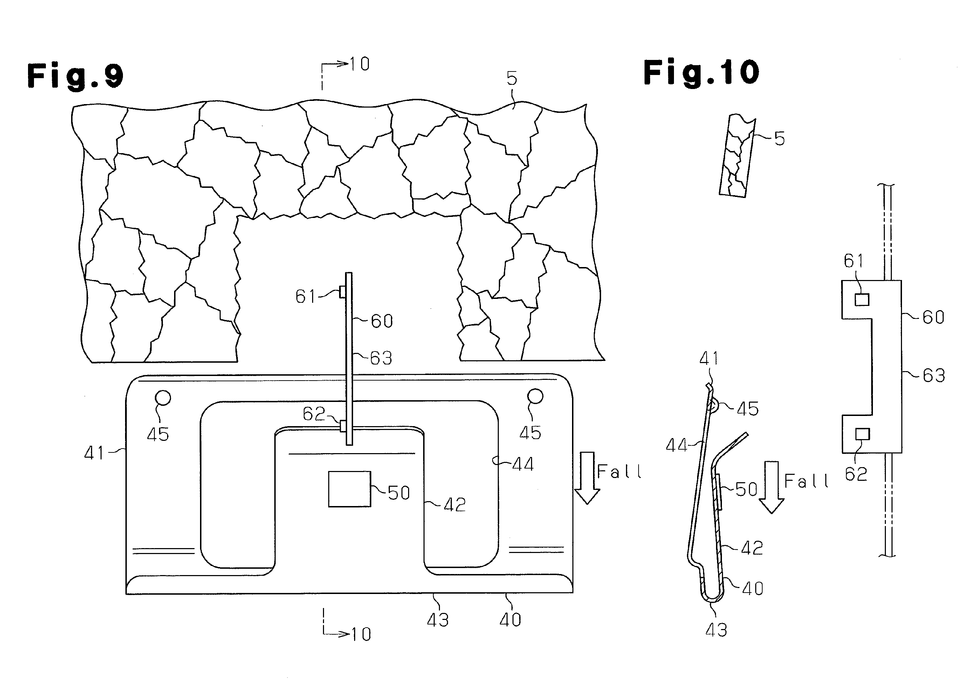

As the strength decreases, the clamping force of the clip 40 crushes the end portion (bottom portion) of the window glass 5, as shown in Figs. 7, 8. That is, the spring force of the clip 40 completely crushes a part of the window glass 5, which is reinforced glass. As a result, the clip 40 falls, as shown in Figs. 9 and 10.

In detail, the urging force of the second member 42 presses the window glass 5 against the first member 41 of the clip 40. As a result, in a state in which the first member 41 supports the surrounding of the opening 44, the urging force of the second member 42 presses and crushes the region of the window glass 5 corresponding to the opening 44. Then, the clip 40 falls.

The microcomputer 72 determines whether or not the variation value of the sum Vn of the output voltages of the magnetic sensors 61 and 62, that is, the sensor output value Vn, is within a tolerable range. When the window glass 5 breaks and the clip 40 falls, the variation value goes outside the tolerable range. This enables detection of the falling of the clip 40.

As described above, reinforced glass has a feature in which partial glass breakage forms cracks throughout the glass and drastically decreases the strength. This feature is used to minimize undetected or erroneously detected window glass breakage.

Even when the window glass 5 is not at the fully-closed position as shown in Fig. 2, breakage of the window glass 5 is detected since the clip 40 falls when the window glass 5 breaks. Specifically, breakage of the window glass is detected even when the window glass is not at the fully-closed position and slightly open for ventilation or the like.

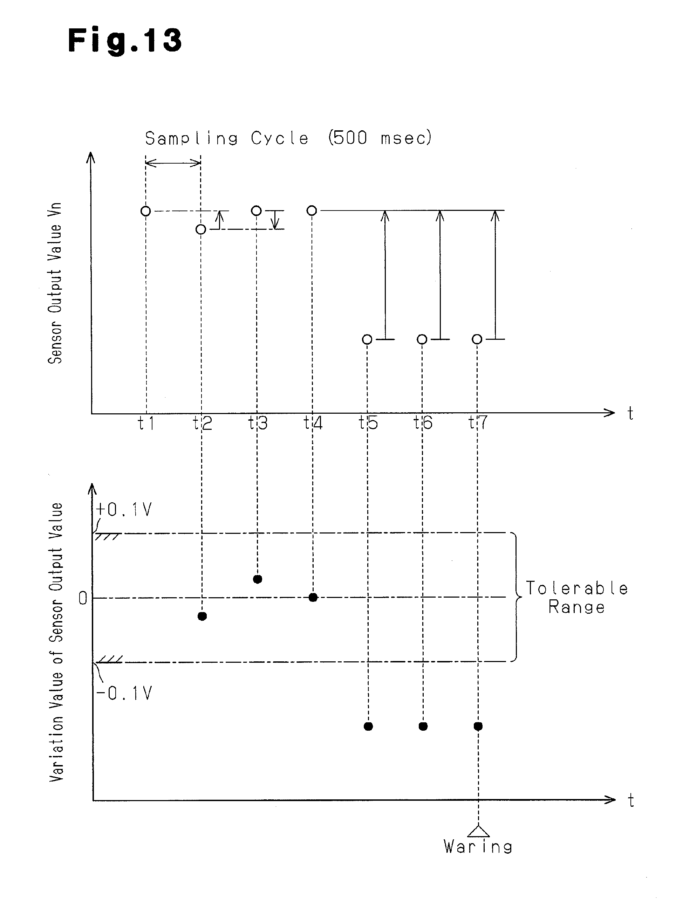

The breakage detection operation of the window glass 5 performed by the microcomputer 72 will now be described in detail. Fig. 13 is a timing chart when detecting breakage of the window glass 5. The horizontal axis of Fig. 13 indicates time. As shown in Fig. 13, the microcomputer 72 samples the sensor output value Vn in predetermined sampling cycles, namely, 500 msec cycles, to determine glass breakage based on the sampled sensor output value Vn.

When the glass breakage detection mode is set in step 100 of Fig. 11, the microcomputer 72 turns on the lamp 81 in step 102 of Fig. 11. Then, in step 103, the microcomputer 72 retrieves the sensor output value Vn and stores the value in the memory 73. In step 104, the microcomputer 72 waits for a predetermined time. In this case, the sensor output value Vn obtained in step 103 is set as the previous sampling value (Vn-1).

Next, in step 105, the microcomputer 72 retrieves the sensor output value Vn in the same manner as in step 103. In step 106, the microcomputer 72 determines whether or not the value obtained by subtracting the previous sensor output value Vn-1 from the current sensor output value Vn, that is, the value obtained by subtracting the previous sampling value from the current sampling value is within a tolerable range. Specifically, as shown in Fig. 13, the tolerable range is ± 0.1 V. That is, as shown in Fig. 13, at timing t2, it is determined whether the value obtained by subtracting the sensor output value at t1 from the sensor output value at t2, namely, variation value (Vn - Vn-1), is within a predetermined tolerable range.

When the variation value is within the predetermined tolerable range, the microcomputer 72 determines in step 106 that the glass is not broken and stores in step 107 the sensor output value Vn, which is retrieved in step 105, in the memory 73. Then, in step 108, the microcomputer 72 waits for a predetermined time. At this timing, the sensor output value Vn obtained in step 105 is set as the previous sampling value (Vn-1).

For example, when the sensor output value Vn varies due to changes in the temperature, the difference between the previous value and the current value within the short period of 500 msec is small, and such difference would be within a tolerable range. Specifically, referring to Fig. 15, the sensor output value differs between 25°C and 85°C. Nevertheless, the variation in the sensor output value Vn is small within the short period of 500 msec. Thus, an affirmative determination is given in step 106.

When the variation value of the sensor output value Vn is outside the predetermined tolerable range in step 106, the microcomputer 72 determines that there is a possibility of glass breakage and executes a retry operation, which will now be described.

First, in step 109, the microcomputer 72 waits for a predetermined time. In step 110, the microcomputer 72 retrieves the sensor output value Vn. In step 111, the microcomputer 72 determines whether or not the value obtained by subtracting the previous sampling value Vn-1 from the current sensor output value Vn is within a tolerable range. Specifically, referring to Fig. 13, at timing t6, it is determined whether the value obtained by subtracting the sensor output value at t4 from the sensor output value at t6, namely, the variation value, is within the predetermined tolerable range. When the variation value is within the predetermined tolerable range, the microcomputer 72 determines that the glass is not broken. Then, in step 112, the microcomputer 72 stores the sensor output value Vn retrieved in step 110 in the memory 73. Then, in step 113, the microcomputer 72 waits for a predetermined time. At this timing, the sensor output value Vn obtained in step 110 is set as the previous sampling value (Vn-1).

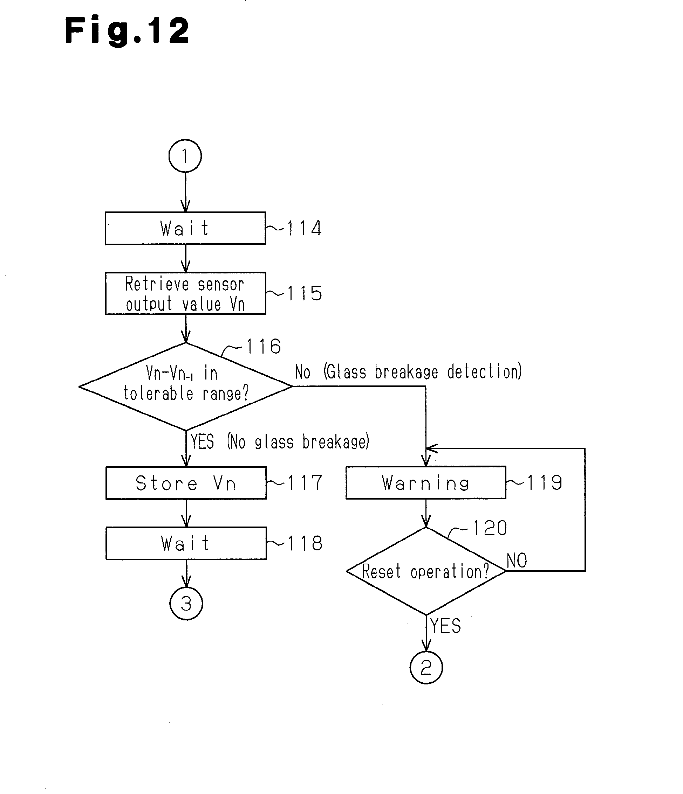

When the variation value is outside the predetermined tolerable range in step 111, the microcomputer 72 determines that there is a possibility of glass breakage, starts a second retry operation, and waits for a predetermined time in step 114, which is shown in Fig. 12. In step 115, the microcomputer 72 retrieves the sensor output value Vn, and determines whether or not the value obtained by subtracting the previous sampling value Vn-1 from the current sensor output value Vn is within the tolerable range in step 116. That is, referring to Fig. 13, it is determined at timing t7 whether the value obtained by subtracting the sensor output value at t4 from the sensor output value at t7, namely, the variation value, is within the predetermined tolerable range. When the variation value is within the predetermined tolerable range, the microcomputer 72 determines that the glass is not broken. Then, in step 117, the microcomputer stores the sensor output value Vn retrieved in step 115 in the memory 73. Subsequently, in step 118, the microcomputer 72 waits for a predetermined time. The sensor output value Vn obtained in step 115 is set as the previous sampling value.

When the variation value of the sensor output value goes outside the predetermined tolerable range in step 116, the microcomputer 72 determines that glass breakage has been detected. Thus, in step 119, the microcomputer 72 activates the warning device 80 and issues an alarm to notify window glass breakage. The microcomputer 72 continuously issues the warning until the reset button 82 is pushed in step 120.

In the present embodiment, the microcomputer 72 serves as a detection unit and a determination unit.

As described above, the microcomputer 72 samples the sensor output value Vn in predetermined time intervals to detect the temporal changes (variation value) of the sensor output value Vn and determine that breakage of the window glass 5 when such a change is outside the tolerable range. The sensor output value Vn does not suddenly change even when the ambient temperature of the magnetic sensors 61 and 62 changes. Thus, a variation in the sensor output value caused by a temperature change will not be determined as breakage of the window glass 5. Further, even when a natural phenomenon such as wind or a temperature change moves the window glass 5, the variation value of the sensor output value Vn would not go outside the tolerable range. Thus, it would not be determined that the window glass 5 was broken. When the window glass 5 breaks, the variation value of the sensor output value Vn goes outside the tolerable range. Thus, breakage of the window glass 5 would be correctly determined.

The above-described embodiment has the advantages described below.
(1) The clip 40 is arranged at the end portion of the window glass 5 and holds the end portion of the window glass 5 with a force that is capable of crushing the end portion of the window glass 5 when the window glass 5 is broken. The magnetic sensors 61 and 62 detect movement (i.e., falling of clip 40) of at least part of the clip 40 when involved in the breakage of the window glass 5. The microcomputer 72 samples the sensor output value in predetermined time intervals and detects temporal changes in the sensor output value. Further, the microcomputer 72 determines that the window glass is broken when the temporal change is outside the tolerable range. This structure provides a breakage detection device capable of ensuring breakage detection without functioning erroneously.
   The breakage detection device ensures breakage detection of the window glass 5 even through the window glass 5 is broken but not completely crushed. The breakage detection device detects the breakage of the window glass even when the window glass is slightly open for ventilation and not located at the fully-closed position. In the prior art (patent document 1), the regulator must undergo modifications, which may decrease reliability and quality. However, in the present embodiment, there is no need to modify the regulator, and the breakage detection device has superior reliability and quality. Further, in the prior art, costs tend to increase as the structure becomes complicated. However, the breakage detection device of the present embodiment has a simple structure and is relatively inexpensive.
(2) The microcomputer 72 has a retry function for performing the processes subsequent to step 109 of Fig. 11 when a temporal change in the sensor output value is outside the tolerable range to re-determine whether or not the temporal change of the sensor output value is outside the tolerable range. This further ensures detection of window glass breakage.
(3) The microcomputer 72 uses the retry function and determines that the window glass is broken when a temporal change in the sensor output value goes outside the tolerable range three consecutive times in steps 106, 111, and 116 of Figs. 11 and 12. This is preferable from a practical viewpoint.

The embodiment described above is not limited to the foregoing description. For example, embodiments in the forms described below are possible.

In the embodiment, an X-arm window regulator is used for the window regulator. Instead, a cable window regulator may be used.

The drive unit is not limited to the electric drive unit 14, which includes the motor. The window glass 5 may be manually driven by a vehicle occupant.

The window glass breakage detection device is applied to the right front door of a vehicle. However, it is obvious that the window glass breakage detection device may be applied to other side doors. Further, in addition to side doors, the window glass breakage detection device may be applied to a rear door and an openable glass roof, which is arranged in a roof.

The clip 40 is arranged at the bottom portion of the window glass 5 but may be arranged instead at a lower sideward part of the window glass 5. It is only required that the clip 40 be arranged on the end portion of the window glass at an unnoticeable area in the vehicle door 1.

The sensor unit 60 includes the two magnetic sensors (Hall elements) 61 and 62 but may include just one magnetic sensor. Further, a magnetic resistor element (MRE) may be used in lieu of the hall element.

As shown in Fig. 6 and Fig. 8, the second member 42 (magnet 50) of the clip 40 is displaced when the window glass 5 breaks. Accordingly, instead of detecting the falling of the clip 40 with the magnetic sensors 61 and 62, other sensor structures may be employed as long as breakage of the window glass 5 may be determined by detecting displacement of the second member 42.

The outputs of the magnetic sensors 61 and 62 are sent to the microcomputer 72. Instead, the outputs may be sent to another ECU (e.g., body ECU) through an in-vehicle communication line. In this case, the magnetic sensors 61 and 62, the A/D converter, the microcomputer, the in-vehicle communication transistor, the in-vehicle communication connector, and the power supply IC may be modularized.

## Claims

1. A breakage detection device for detecting breakage of a window glass capable of opening and closing an opening of a vehicle, the breakage detection device comprising:
a clip that is arranged at an end portion of the window glass to hold the end portion of the window glass with a force enabling the end portion of the window glass to be crushed when the window glass breaks;
a magnetic sensor that detects displacement of at least part of the clip when the window glass breaks;
a detection unit that retrieves an output value of the magnetic sensor in predetermined time intervals to detect a temporal change in the output value of the magnetic sensor; and
a determination unit that determines breakage of the window glass when the temporal change detected by the detection unit is outside a tolerable range.

2. The breakage detection device according to claim 1, wherein the determination unit has a retry function for re-determining whether the temporal change detected by the detection unit is outside the tolerable range when the temporal change detected by the detection unit is outside the tolerable range.

3. The breakage detection device according to claim 2, wherein the determination unit determines that the window glass is broken when the temporal change detected by the detection unit is outside the tolerable range consecutively for a number of times.

4. The breakage detection device according to claim 2 or 3, wherein when a difference between a previously retrieved first output value and a currently retrieved second output value is outside the tolerable range, the determination unit then determines whether or not a difference between the first output value and a third output value, which is retrieved after the second output value, is outside the tolerable range.

5. The breakage detection device according to any one of claims 1 to 4, wherein the magnetic sensor includes at least two magnetic sensors arranged along a direction in which the clip is displaced when the window glass breaks, and the detection unit detects a temporal change in a sum of output values of the magnetic sensors.
